# EUROPEAN PATENT SPECIFICATION

(11) **EP 4 239 773 B1**
(45) Date of publication and mention of the grant of the patent: **26.11.2025**
(21) Application number: 22754272.7
(22) Date of filing: 14.01.2022
(51) Int. Cl.: H01M 50/244, H01M 50/249, H01M 10/04, H01M 50/289

(54) **BATTERY, POWER CONSUMING DEVICE, METHOD FOR PREPARING BATTERY AND DEVICE FOR PREPARING BATTERY**
BATTERIE, ELEKTRISCHE VORRICHTUNG, VERFAHREN ZUR HERSTELLUNG EINER BATTERIE UND VORRICHTUNG ZUR HERSTELLUNG EINER BATTERIE
BATTERIE, DISPOSITIF CONSOMMATEUR D'ÉNERGIE, PROCÉDÉ DE PRÉPARATION DE BATTERIE ET DISPOSITIF DE PRÉPARATION DE BATTERIE

(43) Date of publication of application: 06.09.2023
(73) Proprietor: Contemporary Amperex Technology (Hong Kong) Limited, Central, Central And Western District (HK)
(72) Inventor: LONG, Chao, Ningde, Fujian 352100 (CN); CHEN, Xingdi, Ningde, Fujian 352100 (CN); WANG, Peng, Ningde, Fujian 352100 (CN)
(74) Representative: Gong, Jinping
(86) International application number: PCT/CN2022/072017
(87) International publication number: WO 2023/133800

(56) References cited:
- WO-A1-2021/079595
- WO-A1-2021/079595
- WO-A1-2021/238647
- CN-A- 103 035 875
- CN-A- 106 575 729
- CN-A- 107 039 612
- CN-A- 113 497 298
- CN-U- 207 690 878
- US-A1- 2010 190 050
- US-A1- 2013 095 359
- US-A1- 2022 013 853

## Description

### Technical Field

The present disclosure relates to the field of energy storage devices, and more particularly to a battery, an electric device, a method for preparing a battery, and a device for preparing a battery as specified in claims 1-13.

### Background Art

Energy saving and emission reduction are the key to the sustainable development of the automotive industry. In this case, electric vehicles have become an important part of the sustainable development of the automotive industry due to their advantages of energy saving and environmental friendliness. For the electric vehicles, the battery technology is an important factor for their development.

With the continuous development of the battery technology, higher requirements are imposed on the performance of the battery, and it is expected that various design factors can be considered at the same time for the battery.

US 2010/190050 describes a battery array with a plurality of rectangular battery cells and a battery array separator.

US 2013/095359 describes a battery pack with a stack case, spacers, and inner cover members as insulating members.

### Summary

The present disclosure provides a battery, an electric device, a method for preparing a battery, and a device for preparing a battery, so as to improve the safety performance of the battery.

In a first aspect, a battery is provided, including: a battery cell; a case, configured to accommodate the battery cell; and a protective member, provided in the case, wherein an end portion of the protective member in a first direction is fixed to the case, an electrode terminal is formed at at least one end of the battery cell in a second direction, and the second direction is perpendicular to the first direction; the protective member has a protective portion, the protective portion is supported on the case in the second direction, and the protective portion protrudes beyond the electrode terminal in the second direction, so that the electrode terminal and the case have a gap in the second direction, so as to protect the electrode terminal; a cover component is provided between the case and the battery cell; and a sheath is installed on a surface of the cover component opposite to the battery cell, and the sheath protects the protective portion when the case is impacted.

In the battery, when the battery cell is arranged in such a manner that the electrode terminal faces the case, if the side of the case is subjected to collision or impact, the case may deform due to the impact force, and further apply the impact to the electrode terminal, thus causing the battery cell to be damaged.

In a technical solution of an embodiment of the present disclosure, the protective member having the protective portion is provided in the case, the end portion of the protective member in the first direction is fixed to the case, the protective portion is made to be supported on the case in the second direction, and the electrode terminal and the case have the gap in the second direction by utilizing the protective portion protruding beyond the electrode terminal in the second direction, thus when the case is impacted by an external force, the protective portion of the protective member can bear the impact, and the impact force is transferred from the end portion in the first direction to the case via the protective member, so that the electrode terminal is protected against the impact, and the battery cell is not damaged.

In some embodiments, the protective member is fixed to the case via fixing members, and the fixing members are located at two end portions of the protective member in the first direction. By fixing the protective member to the case with the fixing members at two end portions in the first direction, the protective member can be more stably provided, and the impact force from the outside can be reliably transferred to the case via the protective member and the fixing members.

In some embodiments, the protective member is arranged side by side with the battery cell in the third direction, and the third direction is perpendicular to the first direction and the second direction. Thus, the protective member can be configured at a side surface of the battery cell side by side, a space for providing the protective member can be saved, and the whole battery cell can be easily protected.

In some embodiments, a surface of the protective member opposite to the battery cell in the third direction is joined to the battery cell. By joining the protective member to the battery cell, the rigidity of the protective member can be improved, and a space for providing the protective member also can be further saved, thus improving the space utilization rate in the case.

In some embodiments, the protective member is a plate component extending in the first direction, and the protective portion is a convex portion of the protective member protruding towards the case in the second direction. Thus, the technical effect of protecting the battery cell of the present disclosure can be achieved with a simple structure.

According to the invention, a cover component is provided between the case and the battery cell. By providing the cover component between the battery cell and the case, when the case is impacted by an external force, the cover component also can be used to absorb the impact energy, protect the battery cell, and can enhance the insulation protection to the electrode terminal.

According to the invention, a sheath is installed on a surface of the cover component opposite to the battery cell, and the sheath protects the protective portion when the case is impacted. By providing the sheath for the cover component, the protective portion can be protected by the sheath when being subjected to an external impact force, so that the protective portion will not be greatly deformed or damaged due to the force, and the overall structural stability of the battery can be maintained.

In some embodiments, the cover component has a reinforcing member, the reinforcing member is configured to reinforce rigidity of the cover component, the reinforcing member is formed on a surface of the cover component opposite to the battery cell, and protrudes towards the battery cell, and the sheath is clamped in a concave portion formed by the reinforcing member. By providing the reinforcing member on the cover component, the rigidity of the protective member can be reinforced, and the capability of the cover component of absorbing impact energy is enhanced. Further, by making the reinforcing member to be formed on the surface of the cover component opposite to the battery cell, and protrude towards the battery cell, and clamping the sheath in the concave portion formed by the reinforcing member in the cover component, the sheath can be easily positioned with a simple structure. Moreover, as there is no need to additionally provide a component for fixing the sheath, the manufacturing procedure can be simplified, and the cost can be saved.

In some embodiments, the sheath has a main body portion, a groove is formed on the main body portion, the groove has an opening on a side facing the battery cell, and the protective portion is inserted into the groove via the opening. By forming the opening on the groove for insertion of the protective portion, the part of the protective portion inserted into the opening can be wrapped by the sheath, thus the protective portion can be protected more stably.

In some embodiments, a gap is formed between the protective portion and a side wall of the groove. By forming the gap between the protective portion and the side wall of the groove, the protective portion, when being subjected to an external impact force, can be allowed to deform to a certain extent, and the impact energy can be absorbed by the deformation of the protective portion, thus improving the service lifetime of the protective member.

In some embodiments, the sheath has a support portion, and the support portion is supported on the battery cell. By providing the support portion supported on the battery cell for the sheath, compared with a structure that the sheath is merely clamped in the concave portion formed by the cover component, the sheath can be installed more firmly, moreover, as the support portion is supported on the battery cell, when the case is subjected to an external impact, the protective effect of the sheath on the protective member can be further enhanced by the support portion.

In some embodiments, the battery cell has a cover body, the electrode terminal is provided on the cover body, and the electrode terminal protrudes beyond the cover body in the second direction, and the support portion of the sheath is provided opposite to the cover body, and is supported by the cover body. Thus, the support portion of the sheath can be supported on a part of the cover body of the battery cell where the electrode terminal is not provided, thereby the space utilization rate in the battery can be improved.

In some embodiments, the battery cell has a cover body, the electrode terminal is provided on the cover body, and the electrode terminal protrudes beyond the cover body in the second direction, and the cover component has a buffering member, and the buffering member is provided opposite to the cover body, and is supported by the cover body. Thus, the buffering member provided on the cover component can be supported on a part of the cover body of the battery cell where the electrode terminal is not provided, thereby the impact energy can be further buffered, and meanwhile, the space utilization rate in the battery is improved.

In some embodiments, the cover body of the battery cell further includes a pressure relief mechanism, and the pressure relief mechanism is configured to be actuated, when an internal pressure or temperature of the battery cell reaches a threshold, so as to relieve the internal pressure, and the cover component is provided with an exhaust port at a position opposite to the pressure relief mechanism. By forming the exhaust port opposite to the pressure relief mechanism in the cover component, air can be easily guided and exhausted to prevent the heat generated by the thermal runaway battery cell from being further diffused to adjacent battery cell, and the cover component can be used to achieve thermal insulation and fire prevention when thermal runaway occurs.

In some embodiments, the battery has a plurality of battery cells, the plurality of battery cells are arranged in the first direction, and the protective member extends in the first direction to protect the plurality of battery cells. A plurality of battery cells in a regular arrangement are usually provided in a battery. When the plurality of battery cells are arranged in the first direction, by making the protective member also extend in the first direction, the protective member can cover the plurality of battery cells, and can protect the battery cells widely.

In a second aspect, an electric device is provided, including the battery according to the first aspect. The battery is used to provide electrical energy.

In a third aspect, a method for preparing a battery is provided, including: providing a battery cell; providing a case configured to accommodate the battery cell; and providing a protective member, wherein the protective member is provided in the case, and an end portion of the protective member in a first direction is fixed to the case, wherein an electrode terminal is formed at at least one end of the battery cell in a second direction, and the second direction is perpendicular to the first direction, and the protective member has a protective portion, the protective portion is supported on the case in the second direction, and the protective portion protrudes beyond the electrode terminal in the second direction, so that the electrode terminal and the case have a gap in the second direction, to protect the electrode terminal.

In a fourth aspect, a device for preparing a battery is provided, including: a first providing module, configured to provide a battery cell; a second providing module, configured to provide a case for accommodating the battery cell; a third providing module, configured to provide a protective member, wherein the protective member has a protective portion; and an installing module, disposing the protective member in the case, and fixing an end portion of the protective member in a first direction to the case, an electrode terminal is formed at at least one end of the battery cell in a second direction, and the second direction is perpendicular to the first direction, and the installing module makes the protective portion to be supported on the case in the second direction, and the protective portion protrudes beyond the electrode terminal in the second direction, so that the electrode terminal and the case have a gap in the second direction, to protect the electrode terminal.

### Brief Description of Drawings

The accompanying drawings described herein are used to provide a further understanding of the present disclosure and form a part of the present disclosure, and the exemplary embodiments of the present disclosure and the description thereof are used to explain the present disclosure and do not constitute an improper limitation of the present disclosure. In the accompanying drawings:
FIG. 1 is a schematic view of a vehicle in an embodiment of the present disclosure;
FIG. 2 is a perspective structural schematic view of a battery in an embodiment of the present disclosure;
FIG. 3 is a specific structural schematic view of a protective member in the battery in an embodiment of the present disclosure;
FIG. 4 is a schematic view of structure of the battery, provided with a cover component, in an embodiment of the present disclosure;
FIG. 5(a) is a structural schematic view of the cover component, facing the side of battery cells, in an embodiment of the present disclosure, with the cover component being installed with a sheath;
FIG. 5(b) is an enlarged view of a part A in FIG. 5(a);
FIG. 5(c) is a structural schematic view of the sheath;
FIG. 6(a) is a schematic top view of an assembled structure of the battery in an embodiment of the present disclosure;
FIG. 6(b) is a I-I sectional view of FIG. 6(a);
FIG. 6(c) is an enlarged view of a part B in FIG. 6(b);
FIG. 6(d) is an enlarged view of a part C in FIG. 6(b);
FIG. 7(a) is a II-II sectional view of FIG. 6(a);
FIG. 7(b) is an enlarged view of a part D in FIG. 7(a);
FIG. 8 is a schematic flowchart of a method for preparing a battery in an embodiment of the present disclosure; and
FIG. 9 is a schematic block diagram of a device for preparing a battery in an embodiment of the present disclosure.

### Detailed Description of Embodiments

In order to make objectives, technical solutions, and advantages of the embodiments of the present disclosure clearer, the technical solutions in the embodiments of the present disclosure will be described clearly below in conjunction with accompanying drawings in the embodiments of the present disclosure, and apparently, the embodiments described are some but not all embodiments of the present disclosure. All the other embodiments obtained by those ordinarily skilled in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs; the terms used in the description of the present disclosure are merely for the purpose of describing specific embodiments, but are not intended to limit the present disclosure; the terms "comprise (include)" and "have" and any variations thereof in the description and the claims of the present disclosure as well as the foregoing description of the accompanying drawings are intended to be non-exclusive. The terms "first", "second" and the like in the description and the claims of the present disclosure as well as the above drawings are used to distinguish different objects, rather than describing a specific order or primary-secondary relationship.

The phrase "embodiments" referred to in the present disclosure means that the specific features, structures, and characteristics described in combination with the embodiments may be contained in at least one embodiment of the present disclosure. The phrase appearing at various positions in the description does not necessarily refer to the same embodiment, or an independent or alternative embodiment exclusive of another embodiment. Those skilled in the art could explicitly or implicitly understand that an embodiment described in the present disclosure may be combined with other embodiments.

In the description of the present disclosure, it should be noted that unless otherwise explicitly specified and defined, the terms "install (mount)", "join", "connect", and "attach" should be understood in a broad sense, for example, it may be a fixed connection, a detachable connection, or an integrated connection; it may be a direct connection or an indirect connection via an intermediary, or inner communication between two elements. For those ordinarily skilled in the art, specific meanings of the above-mentioned terms in the present disclosure could be understood according to specific circumstances.

The term "and/or" in the present disclosure is merely an association relationship describing associated objects, and indicates that there may be three relationships, for example, "A and/or B" may indicate three situations, namely, A exists alone, both A and B exist, and B exists alone. In addition, the character "/" in the present disclosure generally indicates that the associated objects before and after the character are in an "or" relation.

In the present disclosure, "a plurality of" means two or more (including two), similarly, "a plurality of groups" means two or more groups (including two groups), and "a plurality of sheets" means two or more sheets (including two sheets).

The battery mentioned in the embodiments of the present disclosure refers to a single physical module that includes a plurality of battery cells to provide a higher voltage and capacity. For example, the battery mentioned in the present disclosure may include a battery module or a battery pack.

The battery cell includes an electrode assembly and an electrolytic solution, and the electrode assembly includes a positive electrode plate, a negative electrode plate, and a separator. The operation of the battery cell mainly relies on movement of metal ions between the positive electrode plate and the negative electrode plate. The positive electrode plate includes a positive electrode current collector and a positive active material layer, the positive active material layer is coated on a surface of the positive electrode current collector, the current collector not coated with the positive active material layer protrudes from the current collector coated with the positive active material layer, and the current collector not coated with the positive active material layer is used as a positive electrode tab. Taking the lithium-ion battery as an example, a material of the positive electrode current collector may be aluminum, and the positive active material may be lithium cobaltate, lithium iron phosphate, ternary lithium or lithium manganate, etc. The negative electrode plate includes a negative electrode current collector and a negative active material layer, the negative active material layer is coated on a surface of the negative electrode current collector, the current collector not coated with the negative active material layer protrudes from the current collector coated with the negative active material layer, and the current collector not coated with the negative active material layer is used as a negative electrode tab. A material of the negative electrode current collector may be copper, and the negative active material may be carbon or silicon, etc. In order to ensure that no fusing occurs when a large current passes, a plurality of positive electrode tabs are provided and stacked together, and a plurality of negative electrode tabs are provided and stacked together. A material of the separator may be PP, PE, or the like. In addition, the electrode assembly may be of a winding structure or a laminated structure, and the embodiments of the present disclosure are not limited thereto.

With the development of the battery technology, it is necessary to consider many design factors, such as energy density, cycle life time, discharge capacity, C-rate and other performance parameters at the same time, and in addition, the safety of the battery should also be taken into consideration.

Currently, the battery for electric vehicles often needs to be composed of tens or even thousands of battery cells.

In the electric device, when a plurality of battery cells are accommodated in a case, if the case is subjected to an impact force from outside, the case may deform due to the impact force, and further impact the battery cells to affect the performance of the battery cells. For example, in the battery used for an electric vehicle, in cases where the battery cells are provided in the case with at least a part of electrode terminals facing a chassis of the vehicle or the ground, when the battery disposed on the chassis of the electric vehicle is impact by collision or foreign object, the battery cells may be damaged by the impact force, or an accident such as fire or explosion may be caused.

In view of this, the present disclosure provides a technical solution. A battery includes: a battery cell; a case, configured to accommodate the battery cell; and a protective member, provided in the case, wherein an end portion of the protective member in a first direction is fixed to the case, an electrode terminal is formed at at least one end of the battery cell in a second direction, and the second direction is perpendicular to the first direction; the protective member has a protective portion, the protective portion is supported on the case in the second direction, and the protective portion protrudes beyond the electrode terminal in the second direction, so that the electrode terminal and the case have a gap in the second direction, so as to protect the electrode terminal.

By providing the protective member having the protective portion in the case, fixing the end portion of the protective member in the first direction to the case, making the protective portion to be supported on the case in the second direction, and making the electrode terminal and the case have a gap in the second direction by utilizing the protective portion protruding beyond the electrode terminal in the second direction, when the case is impacted by an external force, the protective portion of the protective member bears the impact, and the impact force is transferred from the end portion in the first direction to the case through the protective member, so that the electrode terminal is protected against the impact, and the battery cell is not damaged.

An embodiment of the present disclosure provides an electric device, and the battery is used to provide electrical energy for the electric device.

The technical solutions described in the embodiments of the present disclosure are all applicable to various devices using batteries, such as mobile phones, portable apparatuses, notebook computers, electromobiles, electric toys, electric tools, electric vehicles, ships and spacecrafts, for example, the spacecrafts include airplanes, rockets, space shuttles, spaceships, etc.

It should be understood that the technical solutions described in the embodiments of the present disclosure are not only applicable to the devices described above, but also applicable to all devices using batteries. However, for the sake of brevity, all the following embodiments take the electric vehicle as an example for description.

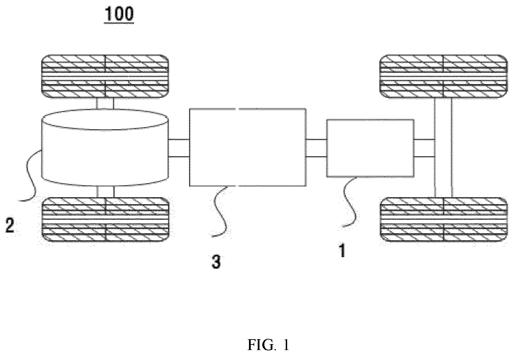

For example, as shown in FIG. 1, it is a structural schematic view of a vehicle 1 in an embodiment of the present disclosure, and the vehicle 1 may be a fuel-powered vehicle, a gas-powered vehicle or a new-energy vehicle, and the new-energy vehicle may be a battery electric vehicle, a hybrid electric vehicle or an extended-range vehicle, or the like. A motor 2, a controller 3, and a battery 1 may be provided inside the vehicle 100, and the controller 3 is configured to control the battery 1 to supply power to the motor 2. For example, the battery 1 may be provided at the bottom or the head or the tail of the vehicle 100. The battery 1 may be used to supply power to the vehicle 100, for example, the battery 1 can be used as an operation power supply of the vehicle 100, and is used for a circuit system of the vehicle 100, for example, for a working power demand of the vehicle 100 during startup, navigation, and running. In another embodiment of the present disclosure, the battery 1 may be used not only as an operating power source for the vehicle 100 but also as a driving power source for the vehicle 100, replacing or partially replacing fuel or natural gas to provide driving power for the vehicle 100.

In order to meet different power usage requirements, the battery 1 may include a plurality of battery cells 10, wherein the plurality of battery cells 10 may be connected in series or in parallel or in a mixed manner, wherein the mixed manner refers to mixture of series connection and parallel connection.

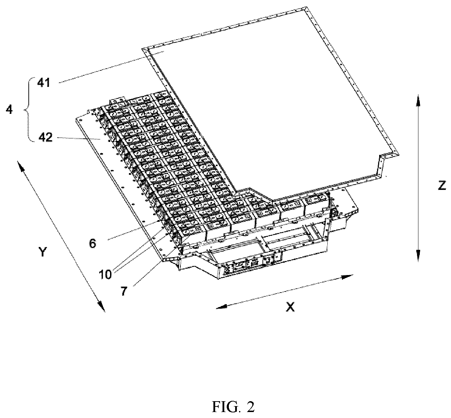

As shown in FIG. 2, it is an exploded schematic view of a perspective structure of the battery 1 in an embodiment of the present disclosure. The battery 1 includes a plurality of battery cells 10, and the plurality of battery cells 10 can be arranged in a first direction X and a third direction Y, where the first direction X is orthogonal to the third direction Y. That is, the plurality of battery cells 10 in the battery 1 may be arranged in a matrix-like structure. Optionally, the battery 1 may include only one battery cell 10, a plurality of battery cells 10 arranged in the first direction X, or a plurality of battery cells 10 arranged in the third direction Y. The battery 1 further may include a case 4, wherein the case 4 is of a hollow structure inside, and the plurality of battery cells 10 are accommodated in the case 4. As shown in FIG. 2, the case 4 may include two parts, respectively referred to as an upper cover 41 and a case shell 42 herein. The upper cover 41 and the case shell 42 are snap-fitted together. The upper cover 41 and the case shell 42 may be shaped according to a shape of the combination of the plurality of battery cells 10. For example, it is feasible that the upper cover 41 and the case shell 42 are both hollow cuboids and each have only one open face, an opening of the upper cover 41 and an opening of the case shell 42 are provided opposite to each other, and the upper cover 41 and the case shell 42 are snap-fitted with each other to form the case 4 having a closed chamber. It is also feasible that the upper cover 41 is a cuboid having an opening and the case shell 42 is plate-shaped, or the case shell 42 is a cuboid having an opening and the upper cover 41 is plate-shaped, and the upper cover 41 and the case shell 42 are provided opposite to each other and snap-fitted to form the case 4 having a closed chamber. The plurality of battery cells 10, after being combined in parallel connection or series connection or mixed connection (both parallel connection and series connection), are disposed in the case 4 formed by snap-fitting the upper cover 41 and the case shell 42.

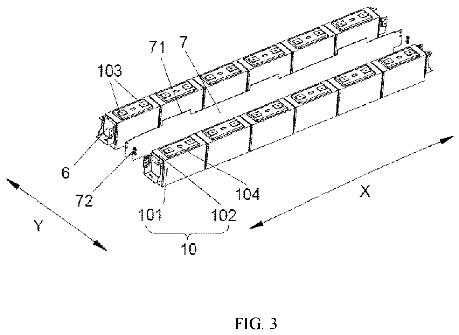

FIG. 2 shows that the case 4 is provided opposite to the battery cells 10, the protective member 7 is provided in the case 4, and the protective member 7 is fixed to the case 4 via end portions of fixing members 6 in the first direction X. The fixing members 6 are located at two end portions of the protective member 7 in the first direction X, thus the protective member 7 can be stably provided, and in the event of an external impact, the impact force can be reliably transferred to the case 4 via the protective member 7 and the fixing members 6. Specific structures of the battery cell 10 and the protective member 7 are described below with reference to FIG. 3.

As shown in FIG. 3, it is a specific structural schematic view of the protective member 7 in the battery 1 in an embodiment of the present disclosure.

FIG. 3 shows an embodiment in which a plurality of battery cells 10 are arranged in the first direction X. In the above, each battery cell 10 includes a housing 101, a cover body 102, two electrode terminals 103 with opposite polarities, and one or more electrode assemblies (not shown) provided in the housing 101. The housing 101 is shaped according to a shape of one or more electrode assemblies after combination, for example, the housing 101 may be a hollow cuboid or cube or cylinder, and FIG. 3 shows a structure that the housing 101 is a hollow cuboid. The housing 101 has an opening, so that one or more electrode assemblies can be placed in the housing 101 from the opening, and the opening can be closed by the cover body 102. The housing 101 is filled with an electrolyte, such as an electrolytic solution. FIG. 3 shows that the housing 101 has an opening at one end in the second direction Z, the battery cell 10 has one cover body 102 to close this opening of the housing 101, and two electrode terminals 103 with opposite polarities are both formed on the cover body 102. However, it is also feasible that each battery cell 10 has an opening at each of two ends of the housing 101 in the second direction Z, and has two cover bodies 102 to close the two openings of the housing 101. The two electrode terminals 103 with opposite polarities also may be formed on the two cover bodies 102 respectively. The second direction Z is orthogonal to both the first direction X and the third direction Y. Each electrode terminal 103 may be of various shapes such as a cylindrical shape, a cuboid shape, a cubic shape, or a polygonal column shape, and the electrode terminals 103 shown in the present embodiment are of a cuboid structure.

As shown in FIG. 3, the cover body 102 further includes a pressure relief mechanism 104, and the pressure relief mechanism 104 is configured to relieve an internal pressure when the internal pressure or temperature of the battery cell 10 reaches a threshold. The pressure relief mechanism 104 refers to an element or component that is actuated when the internal pressure or temperature of the battery cell 10 reaches a predetermined threshold, to relieve the internal pressure or temperature. The threshold is designed different according to different design requirements. The threshold may depend on the material of one or more of the positive electrode plate, the negative electrode plate, the electrolytic solution, and the separator in the battery cell 10. The pressure relief mechanism 10 may take the form of an explosion-proof valve, an air valve, a pressure relief valve or a safety valve, etc., and may specifically use a pressure-sensitive or temperature-sensitive element or structure, that is, when the internal pressure or temperature of the battery cell 10 reaches the predetermined threshold, the pressure relief mechanism 104 performs an action or a weakened structure provided in the pressure relief mechanism 104 is damaged, so as to form an opening or a channel for relieving the internal pressure or temperature.

The "actuate" mentioned in the present disclosure means that the pressure relief mechanism 104 performs an action or is activated to a certain state, such that the internal pressure and temperature of the battery cell 10 is relieved. The action performed by the pressure relief mechanism 104 may include, but not limited to: rupture, fragmentation, tearing or opening of at least a part of the pressure relief mechanism 104, and so on. When the pressure relief mechanism 104 is actuated, a high-temperature and high-pressure substances inside the battery cell 10 will be discharged out from an actuated position as emissions. In this way, the pressure and temperature in the battery cell 10 can be relieved at a controllable pressure or temperature, thereby avoiding more serious potential accidents.

The emissions mentioned in the present disclosure include, but not limited to: the electrolytic solution, the dissolved or split positive and negative electrode plates, fragments of the separator, high-temperature and high-pressure gases generated by reaction, flame, etc.

The protective member 7 and the fixing members 6 are fixed together via fasteners 72. For example, as shown in FIG. 3, as an example of the fasteners 72, bolts are used, threaded holes are formed in the protective member 7 and the fixing members 6, and the protective member 7 and the fixing members 6 can be fixed together by inserting the bolts into the threaded holes of the protective member 7 and the fixing members 6. The fixing manner of the protective member 7 and the fixing members 6 is not limited to this, and various fixing manners such as welding and bonding are also possible.

As shown in FIG. 3, the protective member 7 has a protective portion 71, the protective portion 71 protrudes beyond the electrode terminals 103 in the second direction Z, and in cases where the upper cover 41 and the battery cells 10 are arranged opposite to each other, the protective portion 71 is supported on the upper cover 41 of the case 4, so that the electrode terminals 103 and the upper cover 41 have a gap in the second direction Z.

In the battery 1, when the battery cells 10 are arranged in such a manner that the electrode terminals 103 face the case 4, if the side of the case 4 is subjected to collision or impact, the case 4 may deform due to the impact force, and further apply the impact to the electrode terminals 103, thus causing the battery cells 10 to be damaged.

In the embodiments of the present disclosure, the protective member 7 having the protective portion 71 is provided in the case 4, the end portion of the protective member 7 in the first direction X is fixed to the case 4, the protective portion 71 is made to be supported on the case in the second direction Z, and the electrode terminals 103 and the case 4 have the gap in the second direction Z by utilizing the protective portion 71 protruding beyond the electrode terminals 103 in the second direction Z, thus when the case 4 is impacted by an external force, the protective portion 71 of the protective member 7 can bear the impact, a part of impact energy is absorbed by the deformation of the protective portion 71, and the impact force is transferred from the end portion in the first direction X to the case 4 through the protective member 7 via the fixing members 6, thus protecting the electrode terminals 103.

As shown in FIG. 3, the protective member is arranged side by side with the battery cells 10 in the third direction Y. Thus, the protective member 7 can be arranged to be attached to side surfaces of the battery cells 10, and the battery cells 10 as a whole can be easily protected. A surface of the protective member 7 opposite to the battery cells 10 in the third direction Y also may be joined to the battery cells 10. As a result, the rigidity of the protective member 7 can be improved, and a space for providing the protective member 7 also can be saved, thus improving the space utilization rate in the case 4. As to the manner of joining the protective member 7 to the battery cells 10, they can be bonded by an adhesive, for example.

As a specific structural example of the protective member 7 and the protective portion 71, FIG. 3 shows that the protective member 7 is a plate component extending in the first direction X, and the protective portion 71 is a convex portion of the protective member 7 protruding towards the case 4 in the second direction Z. Thus, the technical effect of protecting the battery cells 10 of the present disclosure can be achieved with a simple structure. However, specific structures of the protective member 7 and the protective portion 71 are not limited thereto, as long as the protective portion 71 can be allowed to protrude beyond the electrode terminals 103 in the second direction Z, so that the electrode terminals 103 and the case have a gap in the second direction Z, thereby protecting the electrode terminals 103. For example, the protective member 7 also may be a support beam, and the protective portion 71 may be a bump protruding towards the side of the case in the support beam.

As described above, in the present embodiment, by way of example, the battery cells 10 have the cover body 102 at an end close to the upper cover 41 in the second direction Z, and the electrode terminals 103 are formed on the cover body 102. However, the present disclosure is not limited thereto, and in cases where the battery cells 10 have the electrode terminals 103 on two sides in the second direction Z, the protective portion 71 may be provided on two sides of the protective member 7 in the second direction Z, thus being capable of coping with external impact forces from both the upper cover 41 and the case shell 42.

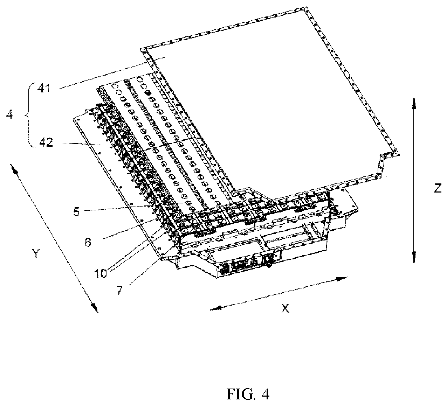

As shown in FIG. 4, it is a schematic view of structure of the battery 1, provided with a cover component 5, in an embodiment of the present disclosure.

FIG. 4 shows that, in the present embodiment, the cover component 5 is provided between the case 4 (the upper cover 41 is shown in the drawing) and the battery cells 10 on a side of the battery cells 10 provided with the electrode terminals 103 in the second direction Z, thus, when the upper cover 41 is impacted by an external force, the battery cells 10 also can be protected by the cover component 5, and the impact resistance of the battery cells 10 can be enhanced. However, the present disclosure is not limited thereto, and in cases where the battery cells 10 have the electrode terminals 103 on two sides in the second direction Z, the cover component 5 can be provided between the upper cover 41 and the battery cells 10, and between the case shell 42 and the battery cells 10, thus being capable of coping with external impact forces from both the upper cover 41 and the case shell 42.

As shown in FIG. 4, in cases where the cover component 5 is provided between the upper cover 41 and the battery cells 10, when the upper cover 41 is subjected to collision or impact, the impact force applies an impact to the side of the electrode terminals 103 from the upper cover 41 via the cover component 5. In this case, the protective portion 71, supported on the cover component 5, can make the electrode terminals 103 and the upper cover 41 have a gap in the second direction Z, and can protect the electrode terminals 103.

That is, by making the protective portion 71 closer to the case 4 than the electrode terminals 103 (parts of the battery cells 10 closest to the case 4) on the side provided with the electrode terminals 103 in the second direction Z, the technical effect of protecting the electrode terminals when being impacted by an external force in the present disclosure can be achieved.

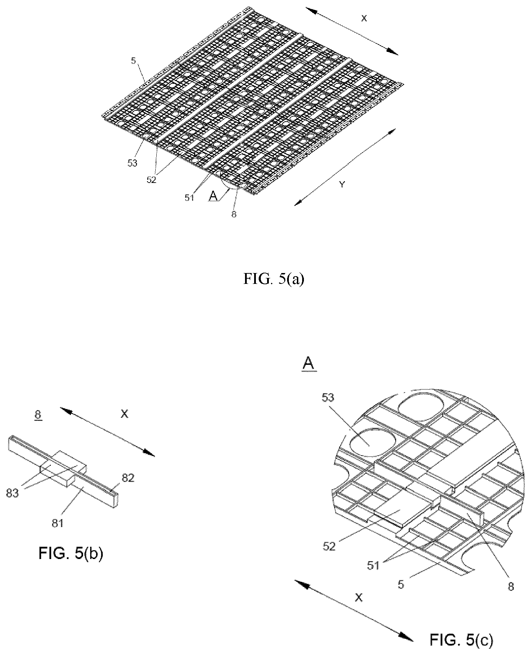

FIG. 5(a) is a structural schematic view of the cover component, facing the side of the battery cells, in an embodiment of the present disclosure, with the cover component being installed with a sheath, FIG. 5(b) is an enlarged view of a part A in FIG. 5(a), and FIG. 5(c) is a structural schematic view of a sheath 8.

As shown in FIG. 5(a), the sheath 8 is installed on a surface of the cover component 5 opposite to the battery cells 10, and the sheath 8 is configured to protect the protective portion 71 of the protective member 7 when the case 4 is impacted. When the case 4 is subjected to an external impact force, the sheath 8 can prevent the impact force from directly acting on the protective portion 71, so that the protective portion 71 will not be greatly deformed or destroyed by the force. A material for forming the sheath 8 is required to have high abrasion resistance and good flame retardancy, for example, PA66 (nylon 66) + 20% GF (glass fiber), PBT (polybutylene terephthalate) + 20% GF (glass fiber) and like materials can be listed.

Moreover, the cover component 5 has a reinforcing member 51, wherein the reinforcing member 51 is configured to reinforce the rigidity of the cover component 5, thus enhancing the capability of the cover component 5 of absorbing impact energy. An example of the reinforcing member 51 is, for example, crisscrossing reinforcing ribs as shown in FIG. 4. But the present disclosure is not limited thereto, for example, the reinforcing ribs also may be formed in a honeycomb shape. In addition, the cover component further may have a buffering member 5, so that the impact energy can be further buffered. A material for forming the buffering member 52 is required to have good elasticity and flame retardancy, for example, rubber, MPPE (modified polyphenylene ether), PU (polyurethane) and like materials can be listed.

The cover component 5 is provided with an exhaust port 53, and the exhaust port 53 is provided at a position opposite to the pressure relief mechanism 104 of the battery cell 10, so that when the pressure relief mechanism 104 is actuated, air can be easily guided and exhausted, thereby preventing the heat generated by the thermal runaway battery cell 10 from further spreading to the adjacent battery cells 10.

As shown in FIG. 5(b), the reinforcing member 51 is formed on a surface of the cover component 5 opposite to the battery cells 10, and protrudes towards the battery cells 10, thus forming a plurality of concave portions. The sheath 8 is clamped in the concave portions formed by the reinforcing member 51. Thus, the sheath 8 can be easily positioned with a simple structure. Moreover, as there is no need to additionally provide a component for fixing the sheath 8, the cost can be saved. However, the present disclosure is not limited thereto, and the sheath 8 also may be provided on the cover component 5 in various manners such as screwing, bonding, and riveting.

As shown in FIG. 5(c), the sheath 8 has a main body portion 81, the main body portion 81 extends in the first direction X, a groove 82 is formed on the main body portion 81, and the groove 82 has an opening on a side facing the battery cells 10. Then, the protective portion 71 can be inserted into the groove 82 via the opening. Thus, the part of the protective portion 71 inserted into the opening can be wrapped by the groove 82 of the sheath 8, thereby the protective portion 71 can be protected more stably. A gap may be formed between the part of the protective portion 71 inserted into the groove 82 and a side wall of the groove 82, accordingly, the protective portion 71, when being subjected to an external impact force, can be allowed to deform to a certain extent, and the impact energy can be absorbed by the deformation of the protective portion 71, thus improving the service life of the protective member 7.

The sheath 8 further may be formed with support portions 83 at two side of the main body portion 81 in the third direction Y, and the support portions 83 can be supported on the battery cells 10. By providing the support portions 83 supported on the battery cells10 for the sheath, compared with a structure that the sheath 8 is merely clamped in the concave portions formed by the cover component 5, the sheath 8 can be installed more firmly, moreover, as the support portions 83 are supported on the battery cells 10, when the case 4 is subjected to an external impact, the protective effect of the sheath 8 on the protective member 7 can be further enhanced by the support portions 83.

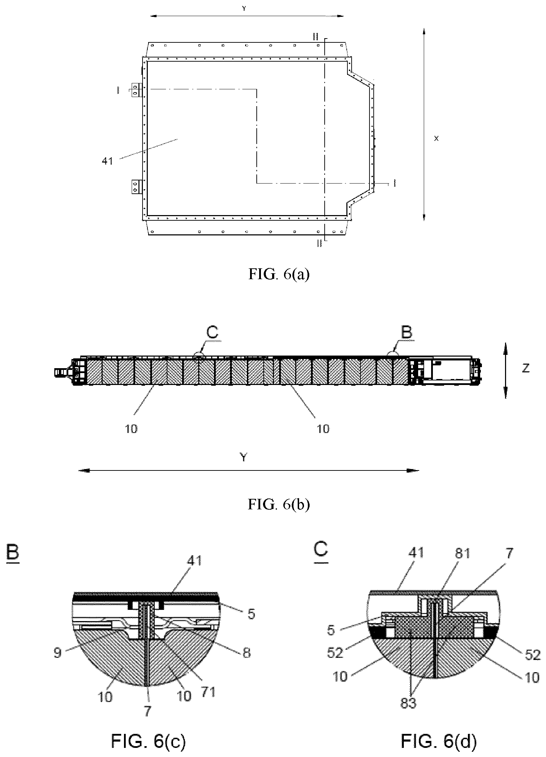

FIG. 6(a) is a schematic top view of an assembled structure of the battery in an embodiment of the present disclosure, FIG. 6(b) is a I-I sectional view of FIG. 6(a), FIG. 6(c) is an enlarged view of a part B in FIG. 6(b), and FIG. 6(d) is an enlarged view of a part C in FIG. 6(b). In the I-I sectional view shown in FIG 6(b), the enlarged part B represents a sectional view cut off from a part of the main body portion 81 of the sheath 8, and the enlarged part C represents a sectional view cut off from a part of the support portion 83 of the sheath 8.

As shown in FIG. 6(b), the battery 1 has a plurality of battery cells 10, the plurality of battery cells 10 are arranged in the third direction Y, and the protective member 7 is provided between two adjacent battery cells 10 in the third direction Y. As shown by the enlarged part B of FIG. 6(c), the cover component 5 is provided to be attached to the upper cover 41, and the cover component 5 is provided with the sheath 8. The protective portion 71 of the protective member 7 protruding towards the upper cover 41 is inserted into the groove 82 of the sheath 8, and a gap is formed between the protective portion 71 and the side wall of the groove 82. As shown in FIG. 6(c), by providing the sheath 8, when being impacted to an external force, the protective portion 71 further can be prevented from being bent and deformed to come into contact with an electrical connection component 9, and the insulation protecting property of the whole battery can be improved.

The enlarged part C of FIG. 6(d) shows that the support portions 83 of the sheath 8 are provided opposite to the cover body 102 of the battery cell 10 and are supported by the cover body 102. Moreover, the buffering member 52 provided on the cover component 5 is provided opposite to the cover body 102 of the battery cells 10, and is supported by the cover body 102. Thus, the support portions 83 of the sheath 8 can be supported on a part of the cover body 102 of the battery cells 10 where the electrode terminals 103 are not provided, thereby the space utilization rate in the battery can be improved. Similarly, the buffering member 52 provided on the cover component 5 also can be supported on a part of the cover body 102 of the battery cells 10 where the electrode terminals 103 are not provided, thus the space utilization rate in the battery can be improved while buffering the impact energy by the buffering member 52. In the above, in the second direction Z, the height of the buffering member 52 with respect to the cover body 102 of the battery cells 10 is smaller than the height of the sheath 8 with respect to the cover body 102.

In this case, by making the sheath 8 inserted with the protective portion 71 closer to the cover component 5 than the electrode terminals 103 (parts of the battery cells 10 closest to the cover component 5) on the side provided with the electrode terminals 103 in the second direction Z, the technical effect of protecting the electrode terminals when being impacted by an external force in the present disclosure can be achieved.

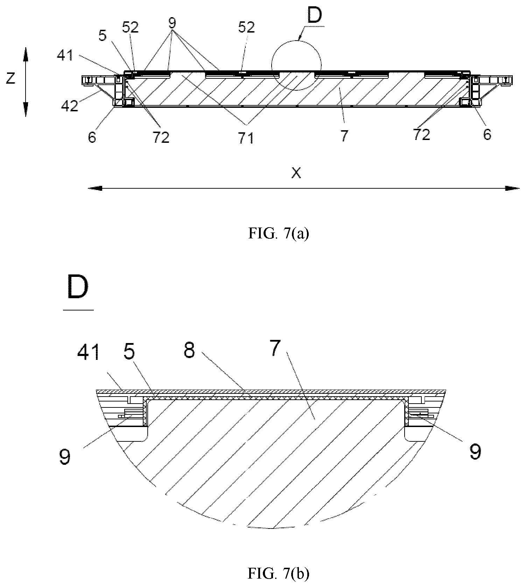

FIG. 7(a) is a II-II sectional view of FIG. 6(a), and FIG. 7(b) is an enlarged view of a part D in FIG. 7(a). As shown in FIG. 7(a), the battery 1 has a plurality of battery cells 10 arranged in the first direction X, and the protective member 7 extends in the first direction X, so as to protect the plurality of battery cells 10. As shown in the enlarged part D of FIG. 7(b), a part of the top of the protective portion 71 of the protective member 7 is inserted into the groove 82 of the main body portion 81 of the sheath 8. However, the present disclosure is not limited thereto, and it is also feasible that the whole of the protective portion 71 is inserted into the groove 82.

In an embodiment of the present disclosure, an electric device is further provided, and the electric device may include the battery 1 in each of the foregoing embodiments. The battery 1 is used in the electric device to provide electrical energy.

The battery and the electric device of the embodiments of the present disclosure are described in the preceding, a method and device for preparing a battery of the embodiments of the present disclosure will be described below, and for the parts that are not described in detail, reference can be made to various foregoing embodiments.

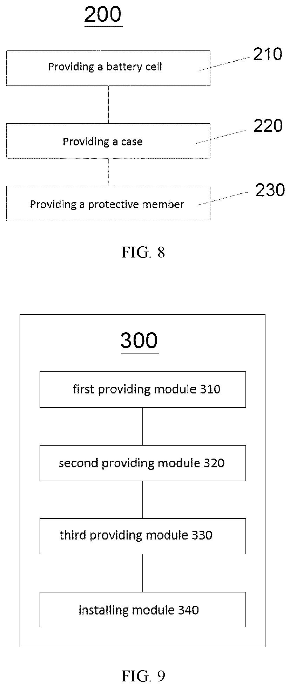

FIG. 8 shows a schematic flowchart of a method 200 for preparing a battery in an embodiment of the present disclosure. As shown in FIG. 8, the method 200 may include:
210, providing a battery cell 10;
220, providing a case 4 configured to accommodate the battery cell 10; and
230, providing a protective member 7, wherein the protective member 7 is provided in the case 4, and an end portion of the protective member 7 in a first direction X is fixed to the case 4.

**In** the above, an electrode terminal 103 is formed at at least one end of the battery cell 10 in a second direction Z, and the second direction Z is perpendicular to the first direction X,
the protective member 7 has a protective portion 71, the protective portion 71 is supported on the case 4 in the second direction Z, and the protective portion 71 protrudes beyond the electrode terminal 103 in the second direction Z, so that the electrode terminal 103 and the case 4 have a gap in the second direction Z, to protect the electrode terminal 103.

FIG. 9 shows a schematic block diagram of a device 300 for preparing a battery in an embodiment of the present disclosure. As shown in FIG. 9, the device 300 for preparing a battery may include: a first providing module 310, a second providing module 320, a third providing module 330, and an installing module 340.

The first providing module 310 is configured to provide a battery cell 10;
the second providing module 320 is configured to provide a case 4 for accommodating the battery cell 10;
the third providing module 330 is configured to provide a protective member 7, and the protective member 7 has a protective portion 71; and
the installing module 340 disposes the protective member 7 in the case, and fixes an end portion of the protective member 7 in a first direction X to the case 4,
an electrode terminal 103 is formed at at least one end of the battery cell 10 in a second direction Z, and the second direction Z is perpendicular to the first direction X, and
the installing module 540 makes the protective portion 71 to be supported on the case 4 in the second direction Z, and the protective portion 71 protrudes beyond the electrode terminal 103 in the second direction Z, so that the electrode terminal 103 and the case 4 have a gap in the second direction Z, to protect the electrode terminal 103.

## Claims

1. A battery (1), comprising:
a battery cell (10);
a case (4), configured to accommodate the battery cell (10); and
a protective member (7), provided in the case (4), wherein an end portion of the protective member (7) in a first direction (X) is fixed to the case (4),
an electrode terminal (103) is formed at at least one end of the battery cell (10) in a second direction (Z), and the second direction (Z) is perpendicular to the first direction (X); and
the protective member (7) has a protective portion (71), the protective portion (71) is supported on the case (4) in the second direction (Z), and the protective portion (71) protrudes beyond the electrode terminal (103) in the second direction (Z), so that the electrode terminal (103) and the case (4) have a gap in the second direction (Z), so as to protect the electrode terminal (103);
the battery being **characterised in that**
a cover component (5) is provided between the case (4) and the battery cell (10); and
a sheath (8) is installed on a surface of the cover component (5) opposite to the battery cell (10), and the sheath (8) protects the protective portion (71) when the case (4) is impacted.

2. The battery (1) according to claim 1, wherein
the protective member (7) is fixed to the case (4) via fixing members (6), and the fixing members (6) are located at two end portions of the protective member (7) in the first direction (X).

3. The battery (1) according to claim 1 or 2, wherein
the protective member (7) is arranged side by side with the battery cell (10) in a third direction (Y), and the third direction (Y) is perpendicular to the first direction (X) and the second direction (Z);
wherein preferably,
a surface of the protective member (7) facing the battery cell (10) in the third direction (Y) is joined to the battery cell (10).

4. The battery (1) according to any one of claims 1~3, wherein
the protective member (7) is a plate component extending in the first direction (X), and the protective portion (71) is a convex portion of the protective member (7) protruding towards the case (4) in the second direction (Z);

5. The battery (1) according to claim 1, wherein
the cover component (4) has a reinforcing member (51), the reinforcing member (51) is configured to reinforce rigidity of the cover component (4),
the reinforcing member (51) is formed on a surface of the cover component (4) opposite to the battery cell (10), and protrudes towards the battery cell (10), and
the sheath (8) is clamped in a concave portion formed by the reinforcing member (51).

6. The battery (1) according to claim 1 or 5, wherein
the sheath (8) has a main body portion (81), a groove (82) is formed on the main body portion (81), the groove (82) has an opening on a side facing the battery cell (10), and the protective portion (71) is inserted into the groove (82) via the opening.

7. The battery (1) according to claim 6, wherein
a gap is formed between the protective portion (71) and a side wall of the groove (82);
and/or
wherein
the sheath (8) has a support portion (83), and the support portion (83) is supported on the battery cell (10), preferably,
wherein
the battery cell (10) has a cover body (102), the electrode terminal (103) is provided on the cover body (102), and the electrode terminal (103) protrudes beyond the cover body (102) in the second direction (Z), and
the support portion (83) of the sheath (8) is provided opposite to the cover body (102), and is supported by the cover body (102).

8. The battery (1) according to any one of claims 1 and 5~7, wherein
the battery cell (10) has a cover body (102), the electrode terminal (103) is provided on the cover body (102), and the electrode terminal (103) protrudes beyond the cover body (102) in the second direction (Z), and
the cover component (5) has a buffering member (52), and the buffering member (52) is provided opposite to the cover body (102), and is supported by the cover body (102).

9. The battery (1) according to any one of claims 1 and 5~8, wherein
the cover body (102) of the battery cell (10) further comprises a pressure relief mechanism (104), and the pressure relief mechanism (104) is configured to be actuated, when an internal pressure or temperature of the battery cell (10) reaches a threshold, so as to relieve the internal pressure, and
the cover component (5) is provided with an exhaust port (53) at a position opposite to the pressure relief mechanism (104).

10. The battery (1) according to any one of claims 1~9, wherein
the battery (1) has a plurality of battery cells (10), the plurality of battery cells (10) are arranged in the first direction (X), and the protective member (7) extends in the first direction (X) to protect the plurality of battery cells (10).

11. An electric device, **characterized by** comprising the battery (1) according to any one of claims 1 to 10, wherein the battery (1) is used to provide electrical energy.

12. A method for preparing a battery (1) according to any one of claims 1 to 10, **characterized by** comprising:
providing a battery cell (10);
providing a case (4) configured to accommodate the battery cell (10); and
providing a protective member (7), wherein the protective member (7) is provided in the case (4), and an end portion of the protective member (7) in a first direction (X) is fixed to the case (4), wherein
an electrode terminal (103) is formed at at least one end of the battery cell (10) in a second direction (Z), and the second direction (Z) is perpendicular to the first direction (X), and
the protective member (7) has a protective portion (71), the protective portion (71) is supported on the case (4) in the second direction (Z), and the protective portion (71) protrudes beyond the electrode terminal (103) in the second direction (Z), so that the electrode terminal (103) and the case (4) have a gap in the second direction (Z), to protect the electrode terminal (103),
and installing a sheath (8) on a surface of the cover component (5) opposite to the battery cell (10), so that the sheath (8) protects the protective portion (71) when the case (4) is impacted.

13. A device for preparing a battery (1) according to any one of claims 1 to 10, **characterized by** comprising:
a first providing module (310), configured to provide a battery cell (10);
a second providing module (320), configured to provide a case (4) for accommodating the battery cell (10);
a third providing module (330), configured to provide a protective member (7), wherein the protective member (7) has a protective portion (71); and
an installing module (340), for disposing the protective member (7) in the case (4), for fixing an end portion of the protective member (7) in a first direction (X) to the case (4), and for installing a sheath (8) on a surface of the cover component (5) opposite to the battery cell (10), wherein an electrode terminal (103) is formed at at least one end of the battery cell (10) in a second direction (Z), and the second direction (Z) is perpendicular to the first direction (X), and
the installing module (340) makes the protective portion (71) to be supported on the case (4) in the second direction (Z), and the protective portion (71) protrudes beyond the electrode terminal (103) in the second direction (Z), so that the electrode terminal (103) and the case (4) have a gap in the second direction (Z), to protect the electrode terminal (103).

## Patentansprüche

1. Batterie (1), die Folgendes umfasst:
eine Batteriezelle (10);
ein Gehäuse (4), das konfiguriert ist, die Batteriezelle (10) aufzunehmen; und
ein Schutzelement (7), das im Gehäuse (4) vorgesehen ist, wobei ein Endabschnitt des Schutzelements (7) in einer ersten Richtung (X) am Gehäuse (4) befestigt ist,
ein Elektrodenanschluss (103) an mindestens einem Ende der Batteriezelle (10) in einer zweiten Richtung (Z) gebildet ist und die zweite Richtung (Z) zur ersten Richtung (X) senkrecht ist; und
das Schutzelement (7) einen Schutzabschnitt (71) aufweist, der Schutzabschnitt (71) in der zweiten Richtung (Z) auf dem Gehäuse (4) getragen wird und der Schutzabschnitt (71) in der zweiten Richtung (Z) über den Elektrodenanschluss (103) vorsteht, derart, dass der Elektrodenanschluss (103) und das Gehäuse (4) einen Zwischenraum in der zweiten Richtung (Z) aufweisen, um den Elektrodenanschluss (103) zu schützen;
wobei die Batterie **dadurch gekennzeichnet ist, dass**
eine Abdeckkomponente (5) zwischen dem Gehäuse (4) und der Batteriezelle (10) vorgesehen ist; und
eine Ummantelung (8) auf einer Fläche der Abdeckkomponente (5), die der Batteriezelle (10) gegenüberliegt, installiert ist und die Ummantelung (8) den Schutzabschnitt (71) schützt, wenn das Gehäuse (4) einem Aufprall ausgesetzt ist.

2. Batterie (1) nach Anspruch 1, wobei
das Schutzelement (7) über Befestigungselemente (6) am Gehäuse (4) befestigt ist und die Befestigungselemente (6) an zwei Endabschnitten des Schutzelements (7) in der ersten Richtung (X) angeordnet sind.

3. Batterie (1) nach Anspruch 1 oder 2, wobei
das Schutzelement (7) in einer dritten Richtung (Y) neben der Batteriezelle (10) angeordnet ist und die dritte Richtung (Y) zur ersten Richtung (X) und zur zweiten Richtung (Z) senkrecht ist;
wobei vorzugsweise
eine Fläche des Schutzelements (7), die der Batteriezelle (10) in der dritten Richtung (Y) zugewandt ist, mit der Batteriezelle (10) verbunden ist.

4. Batterie (1) nach einem der Ansprüche 1-3, wobei
das Schutzelement (7) eine Plattenkomponente ist, die sich in der ersten Richtung (X) erstreckt, und der Schutzabschnitt (71) ein konvexer Abschnitt des Schutzelements (7) ist, der in der zweiten Richtung (Z) zum Gehäuse (4) vorsteht.

5. Batterie (1) nach Anspruch 1, wobei
die Abdeckkomponente (4) ein Verstärkungselement (51) aufweist, das Verstärkungselement (51) konfiguriert ist, die Steifigkeit der Abdeckkomponente (4) zu verstärken,
das Verstärkungselement (51) auf einer Fläche der Abdeckkomponente (4) gebildet ist, die der Batteriezelle (10) gegenüberliegt, und zur Batteriezelle (10) vorsteht, und
die Ummantelung (8) in einem konkaven Abschnitt, der durch das Verstärkungselement (51) gebildet wird, geklemmt ist.

6. Batterie (1) nach Anspruch 1 oder 5, wobei
die Ummantelung (8) einen Hauptkörperabschnitt (81) aufweist, eine Nut (82) auf dem Hauptkörperabschnitt (81) gebildet ist, die Nut (82) eine Öffnung auf einer Seite, die der Batteriezelle (10) zugewandt ist, aufweist und der Schutzabschnitt (71) durch die Öffnung in die Nut (82) eingesetzt wird.

7. Batterie (1) nach Anspruch 6, wobei
zwischen dem Schutzabschnitt (71) und einer Seitenwand der Nut (82) ein Zwischenraum gebildet ist;
und/oder
wobei
die Ummantelung (8) vorzugsweise einen Trägerabschnitt (83) aufweist und der Trägerabschnitt (83) auf der Batteriezelle (10) getragen wird,
wobei
die Batteriezelle (10) einen Abdeckkörper (102) aufweist, der Elektrodenanschluss (103) auf dem Abdeckkörper (102) vorgesehen ist und der Elektrodenanschluss (103) in der zweiten Richtung (Z) über den Abdeckkörper (102) vorsteht, und
der Trägerabschnitt (83) der Ummantelung (8) gegenüber dem Abdeckkörper (102) vorgesehen ist und von dem Abdeckkörper (102) getragen wird.

8. Batterie (1) nach einem der Ansprüche 1 und 5-7, wobei
die Batteriezelle (10) einen Abdeckkörper (102) aufweist, der Elektrodenanschluss (103) auf dem Abdeckkörper (102) vorgesehen ist und der Elektrodenanschluss (103) in der zweiten Richtung (Z) über den Abdeckkörper (102) vorsteht, und
die Abdeckkomponente (5) ein Pufferelement (52) aufweist und das Pufferelement (52) gegenüber dem Abdeckkörper (102) vorgesehen ist und von dem Abdeckkörper (102) getragen wird.

9. Batterie (1) nach einem der Ansprüche 1 und 5-8, wobei
der Abdeckkörper (102) der Batteriezelle (10) ferner einen Druckentlastungsmechanismus (104) umfasst und der Druckentlastungsmechanismus (104) konfiguriert ist, betätigt zu werden, wenn ein Innendruck oder eine Temperatur der Batteriezelle (10) einen Schwellenwert erreicht, um den Innendruck zu entspannen, und
die Abdeckkomponente (5) an einer Position gegenüber dem Druckentlastungsmechanismus (104) mit einer Austrittsöffnung (53) versehen ist.

10. Batterie (1) nach einem der Ansprüche 1-9, wobei
die Batterie (1) mehrere Batteriezellen (10) aufweist, die mehreren Batteriezellen (10) in der ersten Richtung (X) angeordnet sind und das Schutzelement (7) sich in der ersten Richtung (X) erstreckt, derart, dass die mehreren Batteriezellen (10) geschützt sind.

11. Elektrische Vorrichtung, **gekennzeichnet durch** die Batterie (1) nach einem der Ansprüche 1 bis 10, wobei die Batterie (1) verwendet wird, um elektrische Energie bereitzustellen.

12. Verfahren zum Herstellen einer Batterie (1) nach einem der Ansprüche 1 bis 10, **dadurch gekennzeichnet, dass** es Folgendes umfasst:
Bereitstellen einer Batteriezelle (10);
Bereitstellen eines Gehäuses (4) das konfiguriert ist, die Batteriezelle (10) aufzunehmen; und
Bereitstellen eines Schutzelements (7), wobei das Schutzelement (7) im Gehäuse (4) vorgesehen ist und ein Endabschnitt des Schutzelements (7) in einer ersten Richtung (X) am Gehäuse (4) befestigt ist, wobei
ein Elektrodenanschluss (103) an mindestens einem Ende der Batteriezelle (10) in einer zweiten Richtung (Z) gebildet ist und die zweite Richtung (Z) zur ersten Richtung (X) senkrecht ist, und
das Schutzelement (7) einen Schutzabschnitt (71) aufweist, der Schutzabschnitt (71) in der zweiten Richtung (Z) auf dem Gehäuse (4) getragen wird und der Schutzabschnitt (71) in der zweiten Richtung (Z) über den Elektrodenanschluss (103) vorsteht, derart, dass der Elektrodenanschluss (103) und das Gehäuse (4) in der zweiten Richtung (Z) einen Zwischenraum aufweisen, um den Elektrodenanschluss (103) zu schützen, und Installieren einer Ummantelung (8) auf einer Fläche der Abdeckkomponente (5) gegenüber der Batteriezelle (10), derart, dass die Ummantelung (8) den Schutzabschnitt (71) schützt, wenn das Gehäuse (4) einem Aufprall ausgesetzt ist.

13. Vorrichtung zum Herstellen einer Batterie (1) nach einem der Ansprüche 1 bis 10, **dadurch gekennzeichnet, dass** sie Folgendes umfasst:
ein erstes Bereitstellungsmodul (310), das konfiguriert ist, eine Batteriezelle (10) bereitzustellen;
ein zweites Bereitstellungsmodul (320), das konfiguriert ist, ein Gehäuse (4) zum Aufnehmen der Batteriezelle (10) bereitzustellen;
ein drittes Bereitstellungsmodul (330), das konfiguriert ist, ein Schutzelement (7) bereitzustellen, wobei das Schutzelement (7) einen Schutzabschnitt (71) aufweist; und
ein Installationsmodul (340) zum Anordnen des Schutzelements (7) im Gehäuse (4), zum Befestigen eines Endabschnitts des Schutzelements (7) in einer ersten Richtung (X) am Gehäuse (4) und zum Installieren einer Ummantelung (8) auf einer Fläche der Abdeckkomponente (5), die der Batteriezelle (10) gegenüberliegt, wobei
ein Elektrodenanschluss (103) an mindestens einem Ende der Batteriezelle (10) in einer zweiten Richtung (Z) gebildet ist und die zweite Richtung (Z) zur ersten Richtung (X) senkrecht ist, und das Installationsmodul (340) bewirkt, dass der Schutzabschnitt (71) in der zweiten Richtung (Z) auf dem Gehäuse (4) getragen wird und der Schutzabschnitt (71) in der zweiten Richtung (Z) über den Elektrodenanschluss (103) vorsteht, derart, dass der Elektrodenanschluss (103) und das Gehäuse (4) einen Zwischenraum in der zweiten Richtung (Z) aufweisen, um den Elektrodenanschluss (103) zu schützen.

## Revendications

1. Batterie (1), comprenant :
un élément de batterie (10) ;
un boîtier (4), configuré pour loger l'élément de batterie (10) ; et
un organe de protection (7), prévu dans le boîtier (4), dans laquelle une portion d'extrémité de l'organe de protection (7) dans une première direction (X) est fixée au boîtier (4),
une borne d'électrode (103) est formée au niveau d'au moins une extrémité de l'élément de batterie (10) dans une deuxième direction (Z), et la deuxième direction (Z) est perpendiculaire à la première direction (X) ; et
l'organe de protection (7) a une portion de protection (71), la portion de protection (71) est supportée sur le boîtier (4) dans la deuxième direction (Z), et la portion de protection (71) fait saillie au-delà de la borne d'électrode (103) dans la deuxième direction (Z), de sorte que la borne d'électrode (103) et le boîtier (4) ont un espace dans la deuxième direction (Z), de manière à protéger la borne d'électrode (103) ;
la batterie étant **caractérisée en ce que**
un composant de couvercle (5) est prévu entre le boîtier (4) et l'élément de batterie (10) ; et
une gaine (8) est installée sur une surface du composant de couvercle (5) à l'opposé de l'élément de batterie (10), et la gaine (8) protège la portion de protection (71) lorsque le boîtier (4) est impacté.

2. Batterie (1) selon la revendication 1, dans laquelle
l'organe de protection (7) est fixé au boîtier (4) par l'intermédiaire d'organes de fixation (6), et les organes de fixation (6) sont situés au niveau de deux portions d'extrémité de l'organe de protection (7) dans la première direction (X).

3. Batterie (1) selon la revendication 1 ou la revendication 2, dans laquelle
l'organe de protection (7) est agencé côte à côte avec l'élément de batterie (10) dans une troisième direction (Y), et la troisième direction (Y) est perpendiculaire à la première direction (X) et à la deuxième direction (Z) ;
dans laquelle de préférence,
une surface de l'organe de protection (7) faisant face à l'élément de batterie (10) dans la troisième direction (Y) est reliée à l'élément de batterie (10).

4. Batterie (1) selon l'une quelconque des revendications 1 à 3, dans laquelle
l'organe de protection (7) est un composant de plaque s'étendant dans la première direction (X), et la portion de protection (71) est une portion convexe de l'organe de protection (7) faisant saillie vers le boîtier (4) dans la deuxième direction (Z).

5. Batterie (1) selon la revendication 1, dans laquelle
le composant de couvercle (4) a un organe de renforcement (51), l'organe de renforcement (51) est configuré pour renforcer la rigidité du composant de couvercle (4),
l'organe de renforcement (51) est formé sur une surface du composant de couvercle (4) à l'opposé de l'élément de batterie (10), et fait saillie vers l'élément de batterie (10), et
la gaine (8) est enserrée dans une portion concave formée par l'organe de renforcement (51).

6. Batterie (1) selon la revendication 1 ou la revendication 5, dans laquelle
la gaine (8) a une portion de corps principal (81), une rainure (82) est formée sur la portion de corps principal (81), la rainure (82) a une ouverture sur un côté faisant face à l'élément de batterie (10), et la portion de protection (71) est insérée dans la rainure (82) par l'intermédiaire de l'ouverture.

7. Batterie (1) selon la revendication 6, dans laquelle
un espace est formé entre la portion de protection (71) et une paroi latérale de la rainure (82) ; et/ou
dans laquelle
la gaine (8) a une portion de support (83), et la portion de support (83) est supportée sur l'élément de batterie (10), de préférence,
dans laquelle
l'élément de batterie (10) a un corps de couvercle (102), la borne d'électrode (103) est prévue sur le corps de couvercle (102), et la borne d'électrode (103) fait saillie au-delà du corps de couvercle (102) dans la deuxième direction (Z), et
la portion de support (83) de la gaine (8) est prévue à l'opposé du corps de couvercle (102), et est supportée par le corps de couvercle (102).

8. Batterie (1) selon l'une quelconque des revendications 1 et 5 à 7, dans laquelle
l'élément de batterie (10) a un corps de couvercle (102), la borne d'électrode (103) est prévue sur le corps de couvercle (102), et la borne d'électrode (103) fait saillie au-delà du corps de couvercle (102) dans la deuxième direction (Z), et
le composant de couvercle (5) a un organe tampon (52), et l'organe tampon (52) est prévu à l'opposé du corps de couvercle (102), et est supporté par le corps de couvercle (102).

9. Batterie (1) selon l'une quelconque des revendications 1 et 5 à 8, dans laquelle
le corps de couvercle (102) de l'élément de batterie (10) comprend en outre un mécanisme limiteur de pression (104), et le mécanisme limiteur de pression (104) est configuré pour être actionné, lorsqu'une pression ou une température interne de l'élément de batterie (10) atteint un seuil, de manière à diminuer la pression interne, et
le composant de couvercle (5) est pourvu d'un orifice d'échappement (53) au niveau d'une position à l'opposé du mécanisme limiteur de pression (104).

10. Batterie (1) selon l'une quelconque des revendications 1 à 9, dans laquelle
la batterie (1) a une pluralité d'éléments de batterie (10), la pluralité d'éléments de batterie (10) sont agencés dans la première direction (X), et l'organe de protection (7) s'étend dans la première direction (X) pour protéger la pluralité d'éléments de batterie (10).

11. Dispositif électrique, **caractérisé en ce qu'**il comprend la batterie (1) selon l'une quelconque des revendications 1 à 10, dans lequel la batterie (1) est utilisée pour fournir de l'énergie électrique.

12. Procédé de préparation d'une batterie (1) selon l'une quelconque des revendications 1 à 10, **caractérisé en ce qu'**il comprend :
la fourniture d'un élément de batterie (10) ;
la fourniture d'un boîtier (4) configuré pour loger l'élément de batterie (10) ; et
la fourniture d'un organe de protection (7), dans lequel l'organe de protection (7) est prévu dans le boîtier (4), et une portion d'extrémité de l'organe de protection (7) dans une première direction (X) est fixée au boîtier (4), dans lequel
une borne d'électrode (103) est formée au niveau d'au moins une extrémité de l'élément de batterie (10) dans une deuxième direction (Z), et la deuxième direction (Z) est perpendiculaire à la première direction (X), et
l'organe de protection (7) a une portion de protection (71), la portion de protection (71) est supportée sur le boîtier (4) dans la deuxième direction (Z), et la portion de protection (71) fait saillie au-delà de la borne d'électrode (103) dans la deuxième direction (Z), de sorte que la borne d'électrode (103) et le boîtier (4) ont un espace dans la deuxième direction (Z), pour protéger la borne d'électrode (103), et l'installation d'une gaine (8) sur une surface du composant de couvercle (5) à l'opposé de l'élément de batterie (10), de sorte que la gaine (8) protège la portion de protection (71) lorsque le boîtier (4) est impacté.

13. Dispositif de préparation d'une batterie (1) selon l'une quelconque des revendications 1 à 10, **caractérisé en ce qu'**il comprend :
un premier module de fourniture (310), configuré pour fournir un élément de batterie (10) ;
un deuxième module de fourniture (320), configuré pour fournir un boîtier (4) afin de loger l'élément de batterie (10) ;
un troisième module de fourniture (330), configuré pour fournir un organe de protection (7), dans lequel l'organe de protection (7) a une portion de protection (71) ; et
un module d'installation (340), pour disposer l'organe de protection (7) dans le boîtier (4), pour fixer une portion d'extrémité de l'organe de protection (7) dans une première direction (X) au boîtier (4), et pour installer une gaine (8) sur une surface du composant de couvercle (5) à l'opposé de l'élément de batterie (10), dans lequel
une borne d'électrode (103) est formée au niveau d'au moins une extrémité de l'élément de batterie (10) dans une deuxième direction (Z), et la deuxième direction (Z) est perpendiculaire à la première direction (X), et le module d'installation (340) amène la portion de protection (71) à être supportée sur le boîtier (4) dans la deuxième direction (Z), et la portion de protection (71) fait saillie au-delà de la borne d'électrode (103) dans la deuxième direction (Z), de sorte que la borne d'électrode (103) et le boîtier (4) ont un espace dans la deuxième direction (Z), pour protéger la borne d'électrode (103).
